# EUROPEAN PATENT SPECIFICATION

(11) **EP 2 711 935 B1**
(45) Date of publication and mention of the grant of the patent: **09.03.2016**
(21) Application number: 12785481.8
(22) Date of filing: 18.05.2012
(51) Int. Cl.: H01B 7/08, B60R 16/02, H01B 7/00, H01B 13/14

(54) **HIGH-VOLTAGE WIRE, AND METHOD FOR PRODUCING HIGH-VOLTAGE WIRE**
HOCHSPANNUNGSDRAHT UND VERFAHREN ZUR HERSTELLUNG DES HOCHSPANNUNGSDRAHTS
FIL À HAUTE TENSION, ET PROCÉDÉ DE PRODUCTION D'UN FIL À HAUTE TENSION

(30) Priority: 19.05.2011 JP 2011112144
(43) Date of publication of application: 26.03.2014
(73) Proprietor: Yazaki Corporation, Minato-ku Tokyo 108-8333 (JP)
(72) Inventor: NAGAHASHI Mitsuharu, Susono-shi, Shizuoka (JP)
(74) Representative: Grünecker Patent- und Rechtsanwälte PartG mbB
(86) International application number: PCT/JP2012/062870
(87) International publication number: WO 2012/157770

(56) References cited:
- EP-A2- 0 887 806
- DE-A1-102008 061 671
- JP-A- 2 068 813
- JP-A- 4 351 806
- JP-A- 9 007 428
- JP-A- 11 111 067
- JP-A- 2002 150 860
- JP-A- 2006 351 445
- JP-A- 2011 096 574
- JP-U- H0 369 813

## Description

### Technical Field

The present invention relates to a high-voltage wire which includes a plurality of conductors and an insulator that collectively coats the conductors, and a method for producing the high-voltage wire.

### Background Art

### DE 10 2008 061671 A1 discloses a high-voltage wire comprising a plurality of conductors and an insulator which aligns and collectively coats the plurality of conductors.

In recent years, eco-cars such as hybrid vehicles or electric vehicles attract attentions. The penetration rate of hybrid vehicles or electric vehicles has been increasing. The hybrid vehicle or the electric vehicle carries a motor as a power source. To drive the motor, it is necessary to connect wire harnesses which can endure high voltage between a battery and an inverter and between the inverter and the motor. The wire harness which can endure high voltage includes a plurality of high-voltage wires which are electrical pathways. In the following, the electric wire, which the wire harness which can endure high voltage includes, is called a high-voltage wire.

A number of wire harnesses which can endure high voltage are proposed. One example of these wire harnesses is disclosed in the following patent document 1.

In the wire harness disclosed in the following patent document 1, a structure in which a plurality of high-voltage wires are wired to be horizontally aligned in a row is adopted. According to the structure, the height of the wire harness is small, and even if the wire harness is assembled below the vehicle floor, the wire harness is positioned in a place apart from the ground. Therefore, an effect is achieved which is that the wire harness can be prevented from being damaged.

### Related art documents

### Patent documents

Patent document 1: Japan Patent Publication No. 2010-12868

### Summary of Invention

### Technical Problem

Because the wire harness disclosed in the patent document 1 includes a plurality of high-voltage wires which are horizontally aligned in a row, when the wire harness is wired in a vehicle, although the length of the wire harness in the vehicle height direction can be minimized, the length of the wire harness in the vehicle widthwise direction is increased. Thus, the inventor of the present invention assumes that space-saving is demanded in the future, and considers that it is necessary to study the structure to meet such demand.

Moreover, besides the limitation to the wire harness, for example, to increase the traveling distance of the vehicle, it is required to reduce the weight of vehicle components carried in the vehicle.

The present invention is made in view of the above situations, and the object of the present invention is to provide a high-voltage wire and a method for producing the high-voltage wire for which the space can be saved and the weight can be reduced.

### Solution to Problem

The above and other objects of the invention are achieved by the high-voltage wire according to claim 1 and the method for producing a high-voltage wire according to claim 3. Preferred embodiments are claimed in the dependent claims.

### Advantageous Effects of Invention

According to the high-voltage wire of the present invention, compared to traditional ones, effects can be achieved which are that the space can be saved and the weight can be reduced. In particular, when the traditional high-voltage wires which are provided with insulators and conductors are aligned one by one, compared to the high-voltage wire of the present invention, the insulators of the high-voltage wires are interposed between the conductors of the high-voltage wires, respectively. Therefore, the insulators between the conductors are divided into two parts. In contrast, the high-voltage wire of the present invention includes a plurality of aligned conductors and an insulator which collectively coats the plurality of conductors, and the thickness of the insulator at a point, where the interval between adjacent conductors is the smallest, of an adjacent part sandwiched by the adjacent conductors is smaller than the thickness of the insulator at a nonadjacent part. Thus, the interval between the conductors surely becomes narrower than before. Therefore, the high-voltage wire of the present invention achieves effects which are that the width can be reduced compared to the width of a plurality of aligned traditional high-voltage wires, and therefore the space can be saved. For the high-voltage wire of the present invention, since the thickness of the insulator between the conductors is smaller than before, an effect is achieved which is that the weight can be reduced at least due to the thinner insulator.

When the high-voltage wire of the present invention is used in a high voltage circuit, an effect is achieved that a withstanding voltage 5kV of the electric wire can be ensured.

According to the method for producing the high-voltage wire of the present invention, compared to the traditional ones, an effect is achieved which is that the method for producing the high-voltage wire for which the space can be saved and the weight can be reduced can be provided.

According to the method for producing the high-voltage wire of the present invention, effects are achieved which are that by preheating the conductors, the fluidity of the insulator which is extruded on the conductor is improved, and the thickness of the insulator between the adjacent conductors can be easy to be reduced.

### Brief Description of Drawings

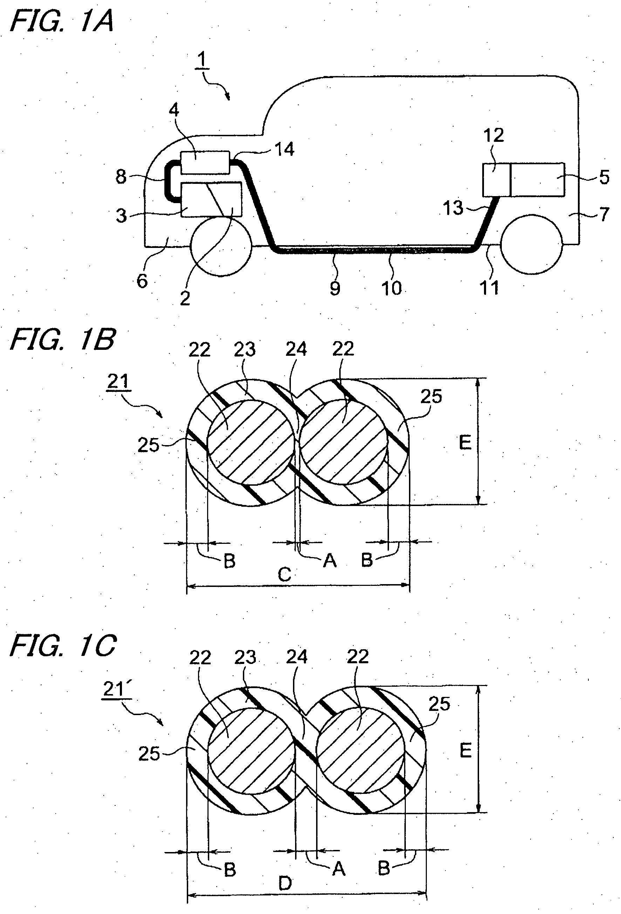

Figs. 1A to 1C are figures according to high-voltage wires of the present invention, in which Fig. 1A is a schematic block diagram of a vehicle, and Figs. 1B and 1C are sectional views of the high-voltage wires.

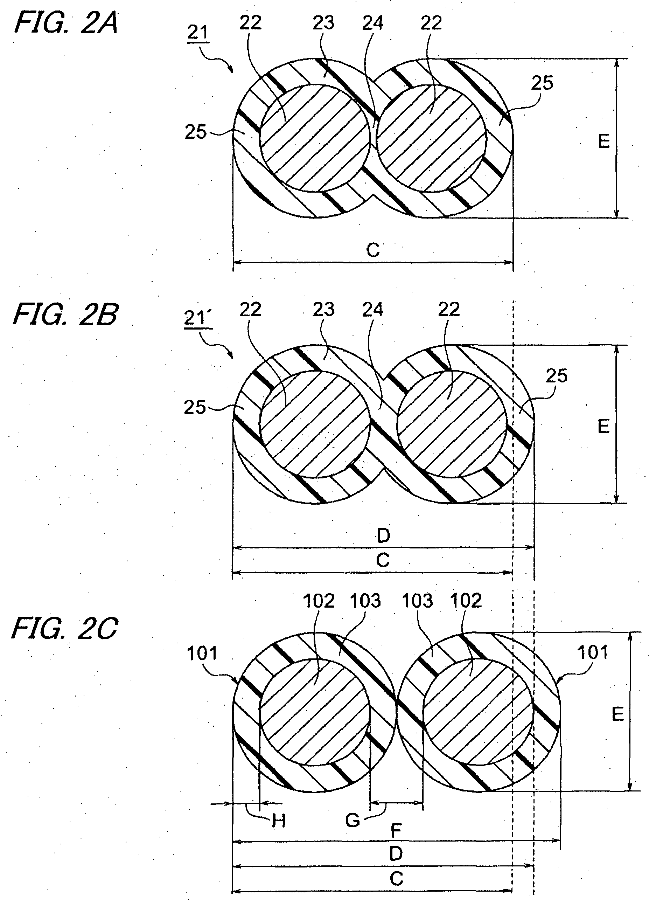

Figs. 2A to 2C are figures to compare the widths of high-voltage wires, in which Fig. 2A is a sectional view of the high-voltage wire in Fig. 1B,Figs. 2B is a sectional views of the high-voltage wire in Fig. 1C, and Fig. 2C is a sectional view of the high-voltage wire of a traditional example.

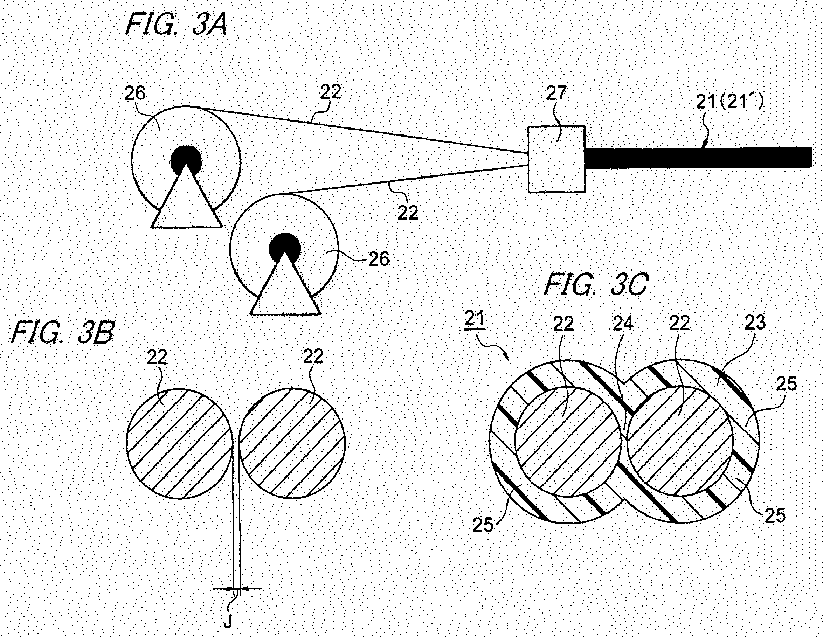

Figs. 3A to 3C are figures according to a method for producing the high-voltage wire, in which Fig. 3A is a schematic block diagram of the whole manufacturing method, Fig. 3B is a sectional view which shows that conductors are supplied, and Fig. 3C is a sectional view which shows that an insulator is extruded to coat the conductors.

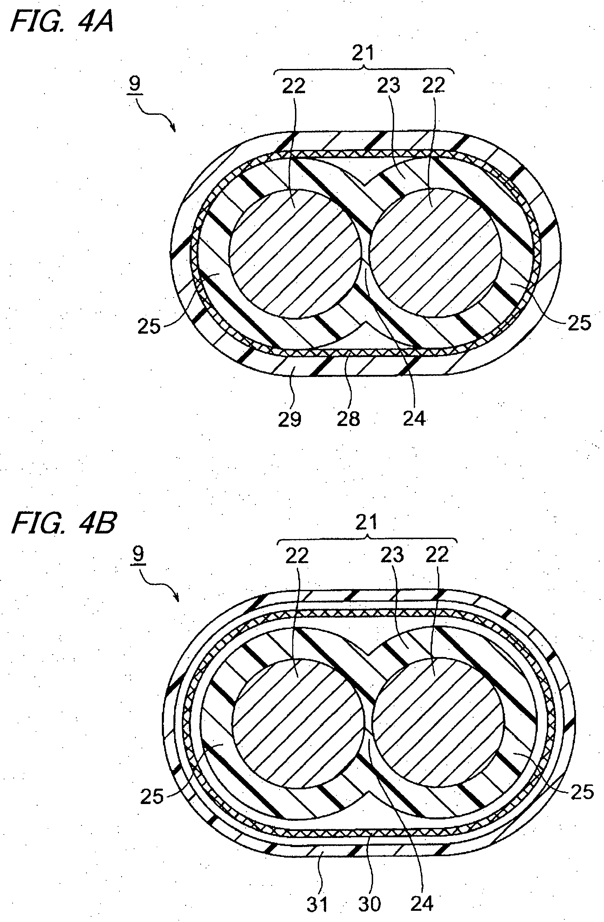

Figs. 4A and 4B are figures of wire harnesses which include the high-voltage wire, in which Fig. 4A is a sectional view of a wire harness in which a shielding member and a sheath are integrally formed with the high-voltage wire, and Fig. 4B is a sectional view of a wire harness in which a shielding member and a sheath are formed separately from the high-voltage wire.

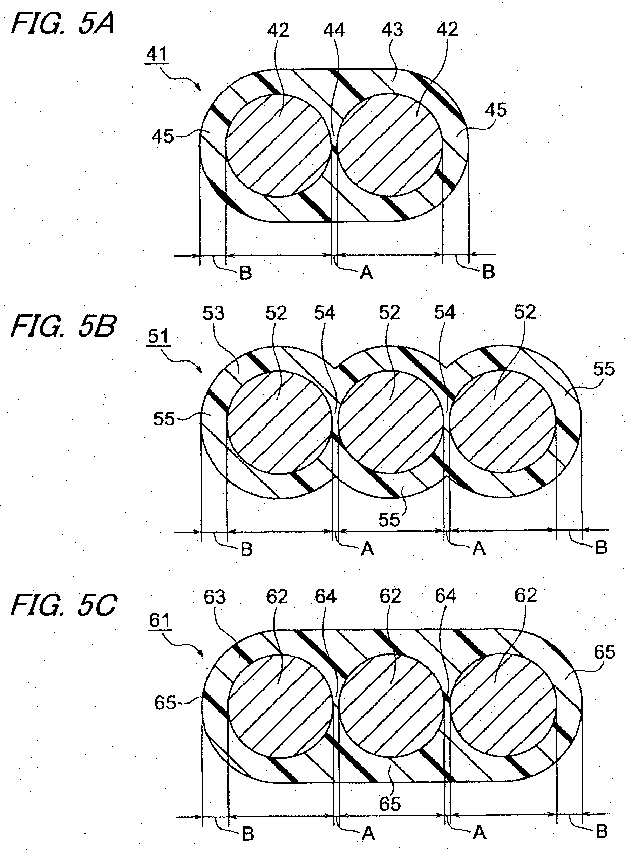

Figs. 5A to 5C are figures according to the high-voltage wires of other examples, in which Fig. 5A is a sectional view of a high-voltage wire which has two conductors, and Figs. 5B and 5C are sectional views of high-voltage wires which have three conductors.

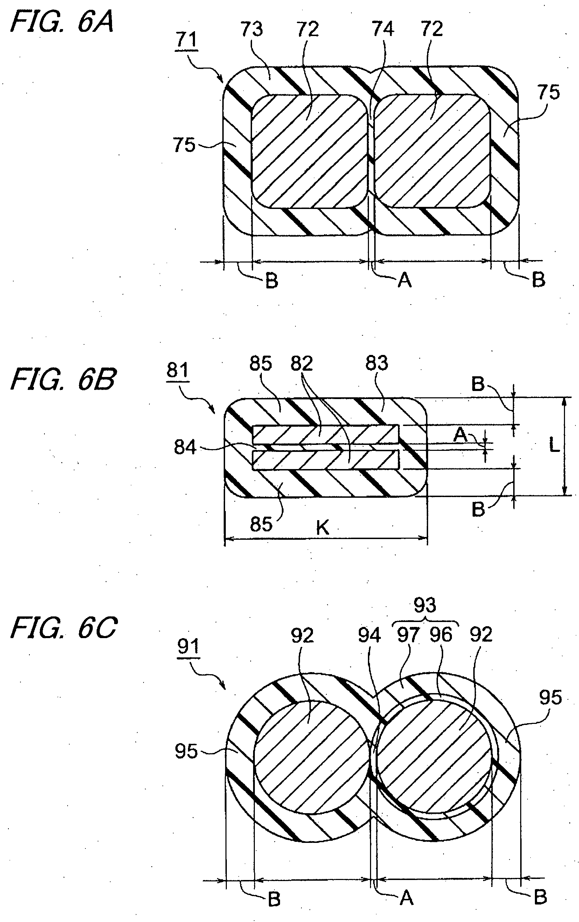

Figs. 6A to 6C are figures according to the high-voltage wires of other examples, in which Fig. 6A is a sectional view of a high-voltage wire whose conductors are rod-like rectangular conductors, Fig. 6B is a sectional view of a high-voltage wire whose conductors are rectangular conductors, and Fig. 6C is a sectional view of a high-voltage wire whose insulator is divided into a first insulator and a second insulator.

### Description of Embodiments

A high-voltage wire includes a plurality of aligned conductors and an insulator which collectively coats the plurality of conductors, in which the thickness of the insulator at a point, where the interval between adjacent conductors is the smallest, of an adjacent part sandwiched by the adjacent conductors is smaller than the thickness of the insulator at a nonadjacent part.

A method for producing a high-voltage wire which has a plurality of aligned conductors and an insulator, includes a step of extruding the insulator to coat the plurality of aligned conductors collectively so that the thickness of the insulator at a point, where the interval between adjacent conductors is the smallest, of an adjacent part sandwiched by the adjacent conductors is smaller than the thickness of the insulator at a nonadjacent part.

### Embodiments

Below, the embodiments will be described with reference to the figures. Figs. 1A to 1C are figures according to high-voltage wires of the present invention, in which Fig. 1A is a schematic block diagram of a vehicle, and Figs. 1B and 1C are sectional views of the high-voltage wires.
Figs. 2A to 2C are figures to compare the widths of high-voltage wires. Figs. 3A to 3C are figures according to a method for producing the high-voltage wire. Figs. 4A and 4C are figures of wire harnesses which includes the high-voltage wire. Figs. 5A to 5C and Figs. 6A to 6C are the high-voltage wires of other examples.

In the present embodiment, an example in which the high-voltage wire of the present invention is adopted in the wire harness which is wired in a hybrid vehicle (or an electric vehicle) is described.

In Fig. 1A, a reference number 1 indicates a hybrid vehicle. The hybrid vehicle 1 is a vehicle which is driven by mixing two powers of an engine 2 and a motor unit 3, and the electric power from a battery 5 (battery pack) will be supplied to the motor unit 3 via an inverter unit 4. The engine 2, the motor unit 3 and the inverter unit 4 are carried in an engine room 6 at the position of the front wheels and the like in the embodiment. The battery 5 is carried in a vehicle rear part 7 of rear wheels and the like. The battery 5 may be carried in a vehicle indoor space behind the engine room 6.

The motor unit 3 and the inverter unit 4 are connected by a wire harness 8. The battery 5 and the inverter unit 4 are connected by a wire harness 9. The wire harnesses 8 and 9 are constructed as high voltage ones. The wire harness 8 may be called a motor cable. The wire harness 8 is shorter than the wire harness 9.

A middle part 10 of the wire harness 9 is wired below a vehicle body floor 11. The wire harness 9 may be wired inside the vehicle. The vehicle body floor 11 is the ground side of the vehicle body, and through holes (not shown in the figure) are formed to penetrate the vehicle body 11 at predetermined positions which are parts of a so-called panel member. The parts of the through holes are provided with a waterproof structure (not shown in the figure) to waterproof the wire harness 9.

The wire harness 9 and the battery 5 are connected through a junction block 12 which the battery 5 is provided with. A back end 13 of the wire harness 9 is electrically connected to the junction block 12. The side of the wire harness 9 at the back end 13 is wired above the floor at the indoor side of the vehicle. The side of the wire harness 9 at a front end 14 is also wired above the floor. The front end 14 of the wire harness 9 is electrically connected to the inverter unit 4

The present embodiment is further described as follows. The motor unit 3 includes a motor and a generator in construction. The inverter unit 4 includes an inverter and a converter in construction. The motor unit 3 is formed as a motor assembly which includes a shielding case. The inverter unit 4 is also formed as an inverter assembly including a shielding case. The battery 5 is a Ni-MH battery or Li-ion battery, and is modulated. Further, for example, an electric power storage device such as a capacitor may be used. The battery 5 shall not be particularly limited as long as the battery 5 may be used for the hybrid vehicle 1 or an electric vehicle.

In Figs. 1A to 1C, the wire harness 9 which connects the inverter unit 4 and the battery 5 includes a high-voltage wire 21 according to the present invention or a high-voltage wire 21' according to the present invention. For either the high-voltage wire 21 or the high-voltage wire 21, the space can be saved and the weight can be reduced.

As shown in Figs. 1B to 2B, the high-voltage wire 21 or the high-voltage wire 21' includes two conductors 22 and an insulator 23 which coats the two conductors 22 collectively. The two conductors 22 have circular cross sections, and are aligned in the longitudinal direction.

For the wire harness 9, the number of the conductors 22 is two, but the number is not limited to 2. For example, for the wire harness 8 which connects the motor unit 3 and the inverter unit 4, the number of the conductors 22 is three as described below. When three or more conductors 22 are aligned, these conductors 22 are parallel to each other in the longitudinal direction, and are so aligned that the axes are in the same plane.

The electric wire size (cross-sectional area) of the high-voltage wire 21 or the high-voltage wire 21' is changed in response to the number of the conductors 22, but it is preferred that the electric wire is manufactured to have an electric wire size of 3mm² to 30mm². The high-voltage wire 21 or the high-voltage wire 21' is manufactured to be a so-called thick electric wire.

The high-voltage wire 21 or the high-voltage wire 21' is formed to have the same flexibility as before, or have such a stiffness that the shape along the wiring path of the wire harness 9 is maintained by itself, that is, when bended from a straight state, the high-voltage wire is maintained in the bended shape without returning to the original state.

A twisted strand conductor which has a cross section of a circular shape formed by twisting copper, copper alloy, aluminum or aluminum alloy strands is used as the conductor 22. The material of the conductor 22 is not limited to the above, but what is used for the conductor of an electric wire can be adopted. Other examples are described below. It is effective to use aluminum or aluminum alloy among the above-described materials to make the conductor 22 cheap and lightweight.

The insulator 23 covers to insulate and protect the conductor 22, and is formed to collectively coat the two conductors 22 aligned as described above. The insulator 23 is formed to have a section of a generally glasses shape in the present embodiment. Preferred materials for the insulator 23 include thermoplastic resin materials such as polyethylene, polypropylene, polyvinyl chloride, and fluorocarbon polymers. The material of the insulator 23 is not limited to the above, but what is used for the insulator of an electric wire can be adopted. In the present embodiment, cross-linked polyethylene is used.

The insulator 23 has an "adjacent part 24" which is a part sandwiched by the conductors 22 adjacent to each other, in other words, a part which the conductors 22 are adjacent to, and, a "nonadjacent part 25" which is a part except the adjacent part 24. The lower limit of a thickness A at the thinnest point of the adjacent part 24 is set to be 0.25mm. The "thinnest point" "is "the point where the interval between the conductors 22 becomes the smallest".

The insulator 23 of the high-voltage wire 21 in Fig. 1B is so formed that the thickness A of the adjacent part 24 is set to be the lower limit, which is 0.25mm. The lower limit, which is 0.25mm, is set to ensure the withstanding voltage of the electric wire is 5kV when the high-voltage wire 21 is used in a high voltage circuit.

The adjacent part 24 is a part for which the abrasion resistance of the electric wire is not considered.

If the upper limit of the thickness A of the thinnest point of the adjacent part 24 is smaller than a thickness G of the traditional example (to be described with reference to Fig. 2C.) (A < G), the space can be saved, and it is also possible to set G as the upper limit. However, in the present embodiment, more preferably, the upper limit of the thickness A of the thinnest point of the adjacent part 24 is set to be the same as a thickness B of the nonadjacent part 25. The thickness B of the nonadjacent part 25 is set to be the same as a thickness H of an insulator 103 of the traditional example (to be described with reference to Fig. 2C).

The insulator 23 of the high-voltage wire 21' in Fig. 1C is so formed that the thickness A of the thinnest point of the adjacent part 24 is set to be the above-described upper limit.

Since the insulator 23 of the high-voltage wire 21 is so formed that the thickness A of the thinnest point of the adjacent part 24 is set to be the lower limit, which is 0.25mm, a width C of the high-voltage wire 21 becomes smaller. The direction of the width C corresponds to the vehicle widthwise direction. Since the insulator 23 of the high-voltage wire 21' is so formed that the thickness A of the thinnest point of the adjacent part 24 is set to be the above-described upper limit, a width D of the high-voltage wire 21' becomes slightly larger than that of the high-voltage wire 21, but is substantially reduced. A dimension E in the vehicle height direction of the high-voltage wire 21 or the high-voltage wire 21' is the same as that of the traditional example. Therefore, the dimension E is such a dimension that even if the middle part 10 of the wire harness 9 is wired below the vehicle body floor 11, the distance from the ground can be ensured.

In Fig. 2, when the high-voltage wire 21 and the high-voltage wire 21' are compared with the two high-voltage wires 101 of the traditional example, the width C of the high-voltage wire 21 < the width D of the high-voltage wire 21' < a width F of the two high-voltage wires 101. It can be seen from the figure that the high-voltage wire 21 or the high-voltage wire 21' according to the present invention is narrower than the two high-voltage wires 101 of the traditional example. The high-voltage wire 101 of the traditional example shown in Fig. 2C includes a conductor 102 and the insulator 103. The insulator 103 is formed to coat the whole peripheral surface of the conductor 102 at a uniform thickness H. The insulator 103 is made to have the uniform thickness H because it is important to secure the abrasion resistance of the electric wire. When the two high-voltage wires 101 are aligned to contact each other, the part adjacent to the conductors 102 will have a thickness G (G is the double of H).

If the high-voltage wire 101 of the traditional example is a copper twisted strand electric wire for which the electric wire size (the cross-sectional area) is 15mm² and the final outer diameter is 7.5mm, when two high-voltage wires 101 of the traditional example are aligned, the width F (the final outer diameter in the major axis direction) = 15.0mm. In contrast, when the high-voltage wire 21' is adopted, the width D = 13.9mm. Therefore, compared to the traditional example, a 7% reduction in width (-7%) can be achieved. Furthermore, when the high-voltage wire 21 is adopted, the width C = 13.1mm. Therefore, compared to the traditional example, a 13% reduction in width (-13%) can be achieved.

The high-voltage wire 21 and the high-voltage wire 21', for example, are manufactured as follows. That is, as shown in Fig. 3A, the high-voltage wire 21 or the high-voltage wire 21' is so manufactured that the conductors 22 are individually unwound from two drums 26, and the insulator 23 is extruded to coat the conductors 22 by an insulator molding body 27. In the insulator molding body 27, an interval J between the conductors 22 is maintained as shown in Fig. 3B. The interval J is the same as the thickness A of the thinnest point of the adjacent part 24. The insulator 23 is extruded to coat the conductors 22 as shown in Fig. 3C. In the present embodiment, before the insulator 23 is extruded to coat the conductors 22, the conductors 22 are preheated. This preheating help to improve the fluidity of the insulator 23.

In Figs. 4A and 4B, the wire harness 9 is formed, for example, as follows. That is, as shown in Fig. 4A, the wire harness 9 includes the high-voltage wire 21 formed as described above, a conductive shielding member 28 made of a web or a metal foil, and an insulative sheath 29 which is extruded to coat the outer side of the shielding member 28. In Fig. 4A, the wire harness 9 is manufactured into a cable shape for which the shielding member 28 and the sheath 29 are integrally formed with the high-voltage wire 21.

Resin material which has various good properties such as abrasion resistance, heat resistance, weather resistance, impact resistance, extrusion molding property and the like is suitably used as the material of the sheath 29. In this case, the wire harness 9 can be made without an exterior member. The resin material which makes it possible for the wire harness 9 to be made without an exterior member is suitable for the insulator 23.

On the other hand, the wire harness 9 as shown in Fig. 4B includes the high-voltage wire 21, a shielding member 30 which accommodates the overall length of the high-voltage wire 21, and a pipe-like exterior member 31 which accommodates the high-voltage wire 21 and the shielding member 30. The shielding member 30 is made of a web or a metal foil and is formed into a pipe-like shape. The exterior member 31 is a flat corrugated tube or a protector.

Although not shown in the figure, the wire harness 9 may include a metal protecting pipe which has a shielding function to accommodate the high-voltage wire 21.

Of course, the above high-voltage wire 21 may be replaced by the high-voltage wire 21', and also may be replaced by the high-voltage wires of variations as shown in Figs. 5A to 6C. The variations are described as follows.

In Figs. 5A to 5C, a high-voltage wire 41 includes two conductors 42, and an insulator 43 which coats the two conductors 42 collectively. The conductor 42 is formed to be the same as the conductor 22 (refer to Fig. 1 B) or a conductor structure of a circular single core. The insulator 43 is formed not to have a section of a generally glasses shape (a section shape in which two circles are arranged to be partly overlapped) but to have a section of an ellipse shape. The insulator 43 is so formed that the thickness A of the thinnest point of an adjacent part 44 is set to be the lower limit, which is 0.25mm. The insulator 43 is so formed that the thickness B of a nonadjacent part 45 is the same as the above-described nonadjacent part 25 which is described with reference to Fig. 1B.

In Fig. 5B, a high-voltage wire 51 includes three conductors 52, and an insulator 53 which coats the three conductors 52 collectively. The conductor 52 is formed to be the same conductor structure of a circular single core as the above-described conductor 22 which is described with reference to Fig. 1B. The insulator 53 is formed to have a section of a generally glasses shape. The insulator 53 is so formed that the thickness A of the thinnest point of the adjacent part 54 is set to be the lower limit, which is 0.25mm. The insulator 53 is so formed that the thickness B of a nonadjacent part 55 is the same as the above-described nonadjacent part 25 which is described with reference to Fig. 1B. The high-voltage wire 51 is suitably used in the wire harness 8 (refer to Fig. 1A) which connects the motor unit 3 and the inverter unit 4.

In Fig. 5C, a high-voltage wire 61 includes three conductors 62, and an insulator 63 which coats the three conductors 62 collectively. The conductor 62 is formed to be the same conductor structure of a circular single core as the above-described conductor 22 which is described with reference to Fig. 1B. The insulator 63 is formed not to have a section of a generally glasses shape, but to have a section of an ellipse shape. The insulator 63 is so formed that the thickness A of the thinnest point of an adjacent part 64 is set to be the lower limit, which is 0.25mm. The insulator 63 is so formed that the thickness B of a nonadjacent part 65 is the same as the above-described nonadjacent part 25 which is described with reference to Fig. 1B. The high-voltage wire 61 is suitably used in the wire harness 8 (refer to Fig. 1A) which connects the motor unit 3 and the inverter unit 4.

In Figs. 6A to 6C, a high-voltage wire 71 includes two conductors 72, and an insulator 73 which coats the two conductors 72 collectively. The conductor 72 is formed to be a conductor structure of a generally square single core (a structure of a rod-like rectangular conductor). The insulator 73 is formed to correspond to the outer shape of the conductor 72. The insulator 73 is so formed that the thickness A of an adjacent part 74 is set to be the lower limit, which is 0.25mm. The insulator 73 is so formed that the thickness B of a nonadjacent part 75 is the same as the above-described nonadjacent part 25 which is described with reference to Fig. 1B.

In Fig. 6B, the high-voltage wire 81 includes two conductors 82 and an insulator 83 which collectively coats the two conductors 82 which are aligned vertically. The conductor 82 is formed to be a conductor structure of a flat single core (a conductor structure of a generally bus bar-like shape). The insulator 83 is formed to correspond to the outer shape of the conductor 82. The insulator 83 is so formed that the thickness A of an adjacent part 84 in the up-down direction is set to be the lower limit, which is 0.25mm. The insulator 83 is so formed that the thickness B of a nonadjacent part 85 is, for example, the same as the above-described nonadjacent part 25 which is described with reference to Fig. 1B. The high-voltage wire 81 is so formed that a width K is narrow and a height L is short.

In Fig. 6C, a high-voltage wire 91 includes two conductors 92, and an insulator 93 which coats the two conductors 92 collectively. The conductor 92 is formed to be the same conductor structure of a circular single core as the above-described conductor 22 which is described with reference to Fig. 1B. The insulator 93 is formed to have a section of a generally glasses shape. The insulator 93 is so formed that the thickness A of the thinnest point of an adjacent part 94 is set to be the lower limit, which is 0.25mm. The insulator 93 is so formed that the thickness B of a nonadjacent part 95 is the same as the above-described nonadjacent part 25 which is described with reference to Fig. 1B. The insulator 93 includes a first insulator 96 and a second insulator 97. The first insulator 96 is extruded to coat one conductor 92 (for example, the conductor 92 at the right side of Fig. 6C) at the thickness A of the thinnest point of an adjacent part 94. After the first insulator 96 is formed, the second insulator 97 is extruded to coat the first insulator 96 which is aligned with the other conductor 92 to contact the first conductor 96, and to coat the other conductor 92 with the same resin material.

As described with reference to Figs. 1A to 6C, according to the high-voltage wire 21 or the high-voltage wire 21' of the present invention, an effect is achieved which is that the space can be saved compared to the high-voltage wire 101 of the traditional example. According to the high-voltage wire 21 or the high-voltage wire 21' of the present invention, since the space can be saved, an effect is achieved which is that the weight can be reduced.

In addition, according to the present invention, an effect is achieved which is that the method for producing the high-voltage wire 21 or the high-voltage wire 21' for which the space can be saved and the weight can be reduced can be provided.

It is apparent that various modifications can be made to the invention within the scope of the claims without changing the purpose of the invention.

Although the invention is described in detail with reference to specific embodiments, it is apparent that various modifications and amendments may be made by those skilled in the art within the scope of the claims without departing from the spirit and scope of the invention.

This application is based on the Japanese patent application (patent application 2011-112144) filed on May 19, 2011.

### Industrial Applicability

According to the present invention, effects are achieved which are that the width can be reduced compared to the width of a plurality of aligned traditional high-voltage wires, and therefore the space can be saved. For the high-voltage wire of the present invention, since the thickness of the insulator between the conductors is smaller than before, an effect is achieved which is that the weight can be reduced at least due to the thinner insulator. The present invention is useful since the present invention relates to a high-voltage wire which includes a plurality of conductors and an insulator that collectively coats the conductors, and a method for producing the high-voltage wire.

### Reference Signs List

1 hybrid vehicle
2 engine
3 motor unit
4 inverter unit
5 battery
6 engine room
7 vehicle rear part
8, 9 wire harness
10 middle part
11 vehicle body floor
12 junction block
13 back end
14 front end
21, 21' high-voltage wire
22 conductor
23 insulator
24 adjacent part
25 nonadjacent part
26 drum
27 insulator molding body
28, 30 shielding member
29 sheath
31 exterior member
41, 51, 61, 71, 81, 91 high-voltage wire
42, 52, 62, 72, 82, 92 conductor
43, 53, 63, 73, 83, 93 insulator
44, 54, 64, 74, 84, 94 adjacent part
45, 55, 65, 75, 85, 95 nonadjacent part
96 first insulator
97 second insulator

## Claims

1. A high-voltage wire comprising a plurality of conductors (22, 42, 52, 62, 72, 82, 92), and
an insulator (23, 43, 53, 63, 73, 83, 93,) which aligns and collectively coats the plurality of conductors (22, 42, 52, 62, 72, 82, 92), wherein
a thickness of the insulator (23, 43, 53, 63, 73, 83, 93) at an adjacent part (24, 44, 54, 64, 74, 84, 94) sandwiched by the adjacent conductors (22, 42, 52, 62, 72, 82, 92) is smaller than the thickness of the insulator (23, 43, 53, 63, 73, 83, 93) at a nonadjacent part (25, 45, 55, 65, 75, 85, 95),
the thickness of the insulator (23, 43, 53, 63, 73, 83, 93) at the adjacent part (24, 44, 54, 64, 74, 84, 94) is set so as to ensure withstanding voltage,
and the thickness of the insulator (23, 43, 53, 63, 73, 83, 93) at the nonadjacent part (25, 45, 55, 65, 75, 85, 95) is set to ensure abrasion resistance.

2. The high-voltage wire according to claim 1, wherein
the thickness of the insulator (23, 43, 53, 63, 73, 83, 93) at thinnest point of the adjacent part (24, 44, 54, 64, 74, 84, 94) is equal to or thicker than 0.25 mm.

3. A method for producing a high-voltage wire which has a plurality of aligned conductors (22, 42, 52, 62, 72, 82, 92) and an insulator (23, 43, 53, 63, 73, 83, 93), wherein the insulator (23, 43, 53, 63, 73, 83, 93) is extruded to coat the plurality of aligned conductors (22, 42, 52, 62, 72, 82, 92) collectively so that a thickness of the insulator (23, 43, 53, 63, 73, 83, 93) at an adjacent part (24, 44, 54, 64, 74, 84, 94) sandwiched by the adjacent conductors (22, 42, 52, 62, 72, 82, 92) is smaller than the thickness of the insulator (23, 43, 53, 63, 73, 83, 93) at a nonadjacent part (25, 45, 55, 65, 75, 85, 95),
the thickness of the insulator (23, 43, 53, 63, 73, 83, 93) at the adjacent part (24, 44, 54, 64, 74, 84, 94) is set to ensure withstanding voltage,
and the thickness of the insulator (23, 43, 53, 63, 73, 83, 93) at the nonadjacent part (25, 45, 55, 65, 95) is set to ensure abrasion resistance.

4. The method for producing the high-voltage wire according to claim 3, wherein
the conductors (22, 42, 52, 62, 72, 82, 92) are preheated before the insulator (23, 43, 53, 63, 73, 83, 93) is extruded to coat the conductors (22, 42, 52, 62, 72, 82, 92).

5. The high-voltage wire according to claim 1, wherein
the insulator (23, 43, 53, 63, 73, 83, 93) at the nonadjacent part (25, 45, 55, 65, 75, 85, 95) is formed to have a uniform thickness.

6. The method for producing the high-voltage wire according to claim 3, wherein
the insulator (23, 43, 53, 63, 73, 83, 93) at the nonadjacent part (25, 45, 55, 65, 75, 85, 95) is formed to have a uniform thickness.

## Patentansprüche

1. Hochspannungsdraht, der eine Vielzahl von Leitern (22, 42, 52, 62, 72, 82, 92) sowie
einen Isolator (23, 43, 53, 63, 73, 83, 93) umfasst, der die Vielzahl von Leitern (22, 42, 52, 62, 72, 82, 92) ausrichtet und zusammen ummantelt, wobei
eine Dicke des Isolators (23, 43, 53, 63, 73, 83, 93) an einem angrenzenden Teil (24, 44, 54, 64, 74, 84, 94), der durch die angrenzenden Leiter (22, 42, 52, 62, 72, 82, 92) eingeschlossen wird, kleiner ist als die Dicke des Isolators (23, 43, 53, 63, 73, 83, 93) an einem nicht angrenzenden Teil (25, 45, 55, 65, 75, 85, 95),
die Dicke des Isolators (23, 43, 53, 63, 73, 83, 93) an dem angrenzenden Teil (24, 44, 54, 64, 74, 84, 94) so festgelegt ist, dass Stehspannung gewährleistet ist,
und die Dicke des Isolators (23, 43, 53, 63, 73, 83, 93) an dem nicht angrenzenden Teil (25, 45, 55, 65, 75, 85, 95) so festgelegt ist, dass Abriebfestigkeit gewährleistet ist.

2. Hochspannungsdraht nach Anspruch 1, wobei
die Dicke des Isolators (23, 43, 53, 63, 73, 83, 93) am dünnsten Punkt des angrenzenden Teils (24, 44, 54, 64, 74, 84, 94) 0,25 mm oder mehr beträgt.

3. Verfahren zum Herstellen eines Hochspannungsdrahtes, der eine Vielzahl ausgerichteter Leiter (22, 42, 52, 62, 72, 82, 92) und einen Isolator (23, 43, 53, 63, 73, 83, 93) aufweist, wobei der Isolator (23, 43, 53, 63, 73, 83, 93) so extrudiert wird, dass er die Vielzahl ausgerichteter Leiter (22, 42, 52, 62, 72, 82, 92) zusammen so ummantelt, dass eine Dicke des Isolators (23, 43, 53, 63, 73, 83, 93) an einem angrenzenden Teil (24, 44, 54, 64, 74, 84, 94), der durch die angrenzenden Leiter (22, 42, 52, 62, 72, 82, 92) eingeschlossen wird, kleiner ist als die Dicke des Isolators (23, 43, 53, 63, 73, 83, 93) an einem nicht angrenzenden Teil (25, 45, 55, 65, 75, 85, 95),
die Dicke des Isolators (23, 43, 53, 63, 73, 83, 93) an dem angrenzenden Teil (24, 44, 54, 64, 74, 84, 94) so festgelegt ist, dass Stehspannung gewährleistet ist,
und die Dicke des Isolators (23, 43, 53, 63, 73, 83, 93) an dem nicht angrenzenden Teil (25, 45, 55, 65, 75, 85, 95) so festgelegt ist, dass Abriebfestigkeit gewährleistet ist.

4. Verfahren zum Herstellen des Hochspannungsdrahtes nach Anspruch 3, wobei
die Leiter (22, 42, 52, 62, 72, 82, 92) vorgewärmt werden, bevor der Isolator (23, 43, 53, 63, 73, 83, 93) zum Ummanteln der Leiter (22, 42, 52, 62, 72, 82, 92) extrudiert wird.

5. Hochspannungsdraht nach Anspruch 1, wobei
der Isolator (23, 43, 53, 73, 83, 93) an dem nicht angrenzenden Teil (25, 45, 55, 65, 75, 85, 95) so ausgebildet ist, dass er eine einheitliche Dicke hat.

6. Verfahren zum Herstellen des Hochspannungsdrahtes nach Anspruch 3, wobei
der Isolator (23, 43, 53, 63, 73, 83, 93) an dem nicht angrenzenden Teil (25, 45, 55, 65, 75, 85, 95) so ausgebildet ist, dass er eine einheitliche Dicke hat.

## Revendications

1. Fil haute tension comprenant une pluralité de conducteurs (22, 42, 52, 62, 72, 82, 92), et
un isolateur (23, 43, 53, 63, 73, 83, 93) qui est aligné avec la pluralité de conducteurs (22, 42, 52, 62, 72, 82, 92) et les recouvre collectivement, dans lequel
l'épaisseur de l'isolateur (23, 43, 53, 63, 73, 83, 93) au niveau d'une partie adjacente (24, 44, 54, 64, 74, 84, 94) intercalée en sandwich entre les conducteurs adjacents (22, 42, 52, 62, 72, 82, 92) est inférieure à l'épaisseur de l'isolateur (23, 43, 53, 63, 73, 83, 93) au niveau d'une partie non adjacente (25, 45, 55, 65, 75, 85, 95),
l'épaisseur de l'isolateur (23, 43, 53, 63, 73, 83, 93) au niveau de la partie adjacente (24, 44, 54, 64, 74, 84, 94) est fixée de manière à garantir une tension de tenue,
et l'épaisseur de l'isolateur (23, 43, 53, 63, 73, 83, 93) au niveau de la partie non adjacente (25, 45, 55, 65, 75, 85, 95) est fixée de manière à garantir la résistance à l'abrasion.

2. Fil haute tension selon la revendication 1, dans lequel
l'épaisseur de l'isolateur (23, 43, 53, 63, 73, 83, 93) au point le plus mince de la partie adjacente (24, 44, 54, 64, 74, 84, 94) est supérieure ou égale à 0,25 mm.

3. Procédé de fabrication d'un fil haute tension comportant une pluralité de conducteurs alignés (22, 42, 52, 62, 72, 82, 92), et un isolateur (23, 43, 53, 63, 73, 83, 93), dans lequel l'isolateur (23, 43, 53, 63, 73, 83, 93) est extrudé de manière à recouvrir collectivement la pluralité de conducteurs alignés (22, 42, 52, 62, 72, 82, 92), de sorte que l'épaisseur de l'isolateur (23, 43, 53, 63, 73, 83, 93) au niveau d'une partie adjacente (24, 44, 54, 64, 74, 84, 94) intercalée en sandwich entre les conducteurs adjacents (22, 42, 52, 62, 72, 82, 92) est inférieure à l'épaisseur de l'isolateur (23, 43, 53, 63, 73, 83, 93) au niveau d'une partie non adjacente (25, 45, 55, 65, 75, 85, 95),
l'épaisseur de l'isolateur (23, 43, 53, 63, 73, 83, 93) au niveau de la partie adjacente (24, 44, 54, 64, 74, 84, 94) est fixée de manière à garantir une tension de tenue,
et l'épaisseur de l'isolateur (23, 43, 53, 63, 73, 83, 93) au niveau de la partie non adjacente (25, 45, 55, 65, 75, 85, 95) est fixée de manière à garantir la résistance à l'abrasion.

4. Procédé de fabrication du fil haute tension selon la revendication 3, dans lequel
les conducteurs (22, 42, 52, 62, 72, 82, 92) sont préchauffés avant que l'isolateur (23, 43, 53, 63, 73, 83, 93) soit extrudé pour recouvrir les conducteurs (22, 42, 52, 62, 72, 82, 92).

5. Fil haute tension selon la revendication 1, dans lequel
l'isolateur (23, 43, 53, 63, 73, 83, 93) au niveau de la partie non adjacente (25, 45, 55, 65, 75, 85, 95) est formé de manière à avoir une épaisseur uniforme.

6. Procédé de fabrication du fil haute tension selon la revendication 3, dans lequel
l'isolateur (23, 43, 53, 63, 73, 83, 93) au niveau de la partie non adjacente (25, 45, 55, 65, 75, 85, 95) est formé de manière à avoir une épaisseur uniforme.
